(19) Europäisches Patentamt
European Patent Office
Office européen des brevets

(11) EP 0 513 157 B1

(12) # EUROPEAN PATENT SPECIFICATION

(45) Date of publication and mention of the grant of the patent:
**22.04.1998 Bulletin 1998/17**

(21) Application number: **91903906.5**

(22) Date of filing: **31.01.1991**

(51) Int Cl.$^6$: **C08F 8/32**, C10L 1/16

(86) International application number:
**PCT/GB91/00147**

(87) International publication number:
**WO 91/11469 (08.08.1991 Gazette 1991/18)**

(54) **FUEL OIL COMPOSITIONS AND ADDITIVES**

HEIZÖLZUSAMMENSETZUNG UND ZUSÄTZE

COMPOSITIONS ET ADDITIFS D'HUILES COMBUSTIBLES

(84) Designated Contracting States:
**AT BE CH DE DK ES FR GB GR IT LI NL SE**

(30) Priority: **31.01.1990 GB 9002134**

(43) Date of publication of application:
**19.11.1992 Bulletin 1992/47**

(60) Divisional application: **97202861.7 / 0 831 106**

(73) Proprietor: **EXXON CHEMICAL PATENTS INC.**
**Florham Park New Jersey 07932 (US)**

(72) Inventors:
- **McALEER, Andrew Matthew**
  **Hampshire SO22 5NG (GB)**
- **TACK, Robert Dryden**
  **Abingdon, Oxforshire OX14 1XB (GB)**
- **IBRAHIM, Tuncel**
  **Oxfordshire OX14 1XB (GB)**

(74) Representative: **Mansell, Keith Rodney et al**
**Exxon Chemical Limited**
**European Patents and Licences**
**Exxon Chemical Technology Centre**
**P O Box 1**
**Milton Hill,**
**Abingdon, Oxfordshire OX13 6BB (GB)**

(56) References cited:
**EP-A- 0 295 853** **GB-A- 2 080 313**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 513 157 B1

Printed by Jouve, 75001 PARIS (FR)

## Description

This invention relates to fuel compositions, and more especially to fuel oil compositions susceptible to wax formation at low temperatures.

Heating oils and other distillate petroleum fuels, for example, diesel fuels, contain alkanes that at low temperature tend to precipitate as large crystals of wax in such a way as to form a gel structure which causes the fuel to lose its ability to flow. The lowest temperature at which the fuel will still flow is known as the pour point.

As the temperature of the fuel falls to or goes below the pour point, difficulties arise in transporting the fuel through lines and pumps. Further, the wax crystals tend to plug fuel lines, screens, and filters at temperatures above the pour point. These problems are well recognized in the art, and various additives have been proposed, many of which are in commercial use, for depressing the pour point of fuel oils. Similarly, other additives have been proposed and are in commercial use, for reducing the size and changing the shape of the wax crystals that do form. Smaller size crystals are naturally desirable since they are less likely to clog a filter; certain additives inhibit the wax from crystallizing as platelets and cause it to adopt an acicular habit, the resulting needles being more likely to pass through a filter than are platelets. The additives may also have the effect of retaining in suspension in the fuel the crystals that have formed, the resulting reduced settling also assisting in prevention of blockages.

The present invention is concerned to provide a fuel additive effective both to improve low temperature flow in a fuel and also to inhibit wax settling.

EP-A-295,853 discloses an ethylene copolymer viscosity index improver dispersant additive useful in oil compositions. The additive is prepared from copolymers such as copolymers of ethylene and propylene; and ethylene, propylene and diolefin; etc, reacted or grafted with ethylenically unsaturated carboxylic acid moieties and further reacted with polyamines having two or more primary amine groups and a carboxylic acid component, and subsequently post-treated or post-reacted with a viscosity stablilizing effective amount of at least one $C_{12}$ to $C_{18}$ hydrocarbyl substituted dicarboxylic acid anhydride amine end-capping or inactivating agent.

EP-A-357,217 discloses novel adducts useful as lubricating oil dispersants and formed by contacting under reaction conditions (A) at least one ethylene-alpha-olefin polymer substituted mono- or dicarboxylic acid material, (B) at least one N-hydroxyaryl amine, which can be optionally alkyl-substituted, (C) at least one aldehyde reactant, and (D) at least one amine-containing reactant, wherein the polymer substitutent in the mono- or dicarboxylic acid material is derived from an ethylene-alpha-olefin polymer having a 300 to 10,000 number average molecular weight, and wherein at least 30 wt% of the polymer chains are terminally ethenylenically unsaturated.

In one aspect, the present invention is directed to a block copolymer of the formula AB, wherein;

(i) moiety A is derived from an ethylene-alpha olefin copolymer having a number average molecular weight of from 1000 to 10000 at least 30% of the copolymer chains of which contain terminal ethenylidene unsaturation, the moiety bearing a terminal electrophilic group derived from an acid substituent; and

(ii) moiety B has a number-average molecular weight of at least 800 and is derived from a oil-soluble polymer comprising a major amount of $C_2$ to $C_{10}$ monoolefin, the moiety bearing a nucleophilic group being from an amine; the link between the moieties being the product of one or more reactions between the electrophilic and nucleophilic groups.

The linkage between moities A and B is the product of one or more reactions between nucleophilic and electrophilic groups, the location of the groups being chosen with regard to a number of considerations, for example, their ease of attachment to the moieties.

The electrophilic group may be derived from an acid substituent on one moiety with the nucleophilic group being from an amine. Conveniently, the acid substituent (whether, for example, carboxylic acid, in the form of mono or diacid, or anhydride, or otherwise) is on the A moiety at the end of the copolymer chain thereof, the nucleophilic group or groups being on the B moiety.

The polymers employed in this invention as moiety A are polymers of ethylene and one or more other alphaolefins having the formula $H_2C{=}CHR^1$ wherein $R^1$ is a straight chain or branched chain alkyl radical comprising 1 to 18 carbon atoms and wherein the polymer contains a high degree of terminal ethenylidene unsaturation. Preferably $R^1$ in the above formula is alkyl of from 1 to 8 carbon atoms, and more preferably is alkyl of 1 carbon atom. Therefore, useful comonomers with ethylene in this invention include, in addition to propylene, butene-1, hexene-1, octene-1,4-methylpentene-1, decene-1, dodecene-1, tridecene-1, tetradecene-1, pentadecene-1, hexadecene-1, heptadecene-1, octadecene-1, nonadecene-1 and mixtures thereof (e.g., mixtures of propylene and 1-butene).

The molar ethylene content of the polymers employed in this invention is preferably in the range of between 20 and 80 percent, more preferably between 30 and 70 percent, and most preferably between 45 and 65 percent, although higher or lower ethylene contents may be present.

The polymers employed in this invention as moiety A generally possess a number average molecular weight of from 1000 to 10,000, preferably of from 1000 to 5,000; most preferably of from 1500 to 3000. The number average molecular weight for such polymers may be determined by several known techniques. A convenient method for such determination is by size exclusion chromatography (also known as gel permeation chromatography (GPC) which additionally provides molecular weight distribution information, see W. W. Yau, J. J. Kirkland and D. D. Bly, "Modern Size Exclusion Liquid Chromatography", John Wiley and Sons, New York, 1979.).

Consequently, such polymers generally possess an intrinsic viscosity (as measured in tetralin at 135°C) of between 0.025 and 0.6 dl/g, preferably of between 0.05 dl/g, most preferably of between 0.075 and 0.4 dl/g.

The polymers employed in this invention as moiety A are further characterized in that the polymer chains possess terminal ethenylidene-type unsaturation. Thus, one end of such polymers will be of the formula POLY-C($R^1$)=$CH_2$ wherein $R^1$ is as defined above and wherein POLY represents the polymer chain. A minor amount of the polymer chains may contain terminal ethenyl unsaturation, i.e. POLY-CH=$CH_2$, and a portion of the polymers may contain internal monounsaturation. Preferably at least 50 percent, more preferably at least 60 percent, and most preferably at least 75 percent (e.g. 75-98%), of the polymer chains exhibit terminal ethenylidene unsaturation. The percentage of polymer chains exhibiting terminal ethenylidene unsaturation may be determined by FTIR spectroscopic analysis, titration, $c^{13}$NMR, or proton NMR.

The polymer used as moiety A may be prepared as described in US-A-4,668,834, EP-A-128,046 and 129,368, and EP-A-0260999.

The polymers for use in the present invention can be prepared by polymerizing monomer mixtures comprising ethylene in combination with the other monomer or monomers in the presence of a catalyst system comprising at least one metallocene (e.g., a cyclopentadienyl-transition metal compound) and an alumoxane compound. The comonomer content can be controlled through the selection of the metallocene catalyst component and by controlling the partial pressure of the various monomers.

The catalysts employed in the production of the reactant polymers are organometallic coordination compounds which are cyclopentadienyl derivatives of a Group 4b metal of the Periodic Table of the Elements (56th Edition of Handbook of Chemistry and Physics, CRC Press [1975]) and include mono, di and tricyclopentadienyls and their derivatives of the transition metals. Particularly desirable are the metallocene of a Group 4b metal such as titanium, zirconium, and hafnium. The alumoxanes employed in forming the reaction product with the metallocenes are themselves the reaction products of an aluminum trialkyl with water.

In general, at least one metallocene compound is employed in the formation of the catalyst. As indicated, supra, metallocene is a metal derivative of a cyclopentadiene. The metallocenes usefully employed in accordance with this invention contain at least one cyclopentadiene ring. The metal is selected from the Group 4b preferably titanium, zirconium, and hafnium, and most preferably hafnium and zirconium. The cyclopentadienyl ring can be unsubstituted or contain one or more substituents (e.g., from 1 to 5 substituents) such as, for example, the hydrocarbyl substituent (e.g., up to 5 $C_1$ to $C_5$ hydrocarbyl substituents) or other substituents, e.g. such as, for example, a trialkyl silyl substituent. The metallocene can contain one, two, or three cyclopentadienyl rings; however, two rings are preferred.

Useful metallocenes can be represented by the general formulas:

$$\text{I.} \quad (Cp)_m MR_n X_q$$

wherein Cp is a cyclopentadienyl ring, M is a Group 4b transition metal, R is a hydrocarbyl group or hydrocarboxy group having from 1 to 20 carbon atoms, X is a halogen, and m is a whole number from 1 to 3, n is a whole number from 0 to 3, and q is a whole number from 0 to 3.

$$\text{II.} \quad (C_5R'_k)_g R''\, s\, (C_5R'_k)\, MQ_{3-g}$$

and

$$\text{III.} \quad R''_s(C_5R'_k)_2MQ'$$

wherein ($C_5R'_k$) is a cyclopentadienyl or substituted cyclopentadienyl, each R' is the same or different and is hydrogen or a hydrocarbyl radical such as alkyl, alkenyl, aryl, alkylaryl, or arylalkyl radical containing from 1 to 20 carbon atoms, a silicon containing hydrocarbyl radical, or hydrocarbyl radicals wherein two carbon atoms are Joined together to form a $C_4$-$C_6$ ring, R" is a $C_1$-$C_4$ alkylene radical, a dialkyl germanium or silicon, or a alkyl phosphine or amine radical bridging two ($C_5R'_k$) rings, Q is a hydrocarbyl radical such as aryl, alkyl, alkenyl, alkylaryl, or aryl alkyl radical having

from 1-20 carbon atoms, hydrocarboxy radical having from 1-20 carbon atoms or halogen and can be the same or different from each other, Q' is an alkylidene radical having from 1 to about 20 carbon atoms, s is 0 or 1, g is 0, 1 or 2, s is 0 when g is 0, k is 4 when s is 1, and k is 5 when s is 0, and M is as defined above. Exemplary hydrocarbyl radicals are methyl, ethyl, propyl, butyl, amyl, isoamyl, hexyl, isobutyl, heptyl, octyl, nonyl, decyl, cetyl, 2-ethylhexyl, phenyl. Exemplary silicon containing hydrocarbyl radicals are trimethylsilyl, triethylsilyl and triphenylsilyl. Exemplary halogen atoms include chlorine, bromine, fluorine and iodine and of these halogen atoms, chlorine is preferred. Exemplary hydrocarboxy radicals are methoxy ethoxy, butoxy, amyloxy. Exemplary of the alkylidene radicals is methylidene, ethylidene and propylidene.

Illustrative, but non-limiting examples of the metallocenes represented by formula I are dialkyl metallocenes such as bis(cyclopentadienyl)titanium dimethyl, bis(cyclopentadienyl)titanium diphenyl, bis(cyclopentadienyl)zirconium dimethyl, bis(cyclopentadienyl)zirconium diphenyl, bis(cyclopentadienyl)hafnium dimethyl and diphenyl, bis(cyclopentadienyl)titanium di-neopentyl, his(cyclopentadienyl)zirconiunl di-neopentyl, bis(cyclopentadenyl)titanium dibenzyl, bis (cyclopentadenyl)zirconium dibenzyl, bis(cyclopentadienyl)vanadium dimethyl; the mono alkyl metallocenes such as bis(cyclopentadienyl)titanium, methyl chloride, bis(cyclopentadienyl) titanium ethyl chloride bis(cyclopentadienyl)titanium phenyl chloride, bis(cyclopentadienyl)zirconium hydrochloride, bis(cyclopentadienyl)zirconium methyl chloride, bis(cyclopentadienyl)zirconium ethyl chloride, bis(cyclopentadienyl)zirconium phenyl chloride, bis(cyclopentadienyl) titanium methyl bromide, bis(cyclopentadienyl)titanium methyl iodide, bis(cyclopentadienyl)titanium ethyl bromide, bis (cyclopentadienyl) titanium ethyl iodide, bis(cyclopentadienyl)titanium phenyl bromide, bis(cyclopentadienyl)titanium phenyl iodide, bis(cyclopentadienyl)zirconium methyl bromide, bis(cyclopentadienyl)zirconium methyl iodide, bis(cyclopentadienyl)zirconium ethyl bromide. bis(cyclopentadienyl)zirconium ethyl iodide, bis(cyclopentadienyl)zirconium phenyl bromide, bis(cyclopentadienyl)zirconium phenyl iodide; the trialkyl metallocenes such as cyclopentadienyltitanium trimethyl, cyclopentadienyl zirconium triphenyl, and cyclopentadienyl zirconium trineopentyl, cyclopentadienylzirconium trimethyl, cyclopentadienylhafnium triphenyl, cyclopentadienylhafnium trineopentyl, and cyclopentadienylhafnium trimethyl.

Illustrative, but non-limiting examples of II and III metallocenes which can be usefully employed are monocyclopentadienyls titanocenes such as, pentamethylcyclopentadienyl titanium trichloride, pentaethylcyclopentadienyl titanium trichloride, bis(pentamethylcyclopentadienyl) titanium diphenyl, the carbene represented by the formula bis(cyclopentadienyl)titanium=$CH_2$ and derivatives of this reagent such as bis(cyclopentadienyl)Ti=$CH_2.Al(CH_3)_3$, $Cp_2TiCH_2)_2$,

$$Cp_2\overline{TiCH_2CH(CH_3)C}H_2,$$

$$Cp_2\overline{Ti-CH_2CH_2C}H_2;$$

substituted bis(Cp)Ti(IV) compounds such as bis(indenyl) titanium diphenyl or dichloride, bis(methylcyclopentadienyl) titanium diphenyl or dihalides; dialkyl, trialkyl, tetra-alkyl and penta-alkyl cyclopentadienyl titanium compounds such as bis(1,2-dimethylcyclopentadienyl)titanium diphenyl or dichloride, bis(1,2-diethylcyclopentadienyl)titanium diphenyl or dichloride and other dihalide complexes; Silicon, phosphine, amine or carbon bridged cyclopentadiene complexes, such as dimethylsilyldicyclopentadienyl titanium diphenyl or dichloride, methyl phosphine dicyclopentadienyl titanium diphenyl or dichloride, methylenedicyclopentadienyl titanium diphenyl or dichloride and other complexes described by formulae II and III.

Illustrative but non-limiting examples of the zirconocenes of Formula II and III which can be usefully employed are, pentamethylcyclopentadienyl zirconium trichloride, pentaethylcyclopentadienyl zirconium trichloride, the alkyl substituted cyclopentadienes, such as bis(ethylcyclopentadienyl)zirconium dimethyl, bis(beta-phenylpropylcyclopentadienyl) zirconium dimethyl, bis(methylcyclopentadienyl) zirconium dimethyl, bis(n-butylcyclopentadienyl)zirconium dimethyl bis(cyclohexylmethylcyclopentadienyl)zirconium dimethyl bis(n-octyl-cyclopentadienyl)zirconium dimethyl, and haloalkyl and dihydride, and dihalide complexes of the above; dialkyl, trialkyl, tetra-alkyl, and penta-alkyl cyclopentadienes, such as bis(pentamethylcyclopentadienyl)zirconium diphenyl, bis(pentamethylcyclopentadienyl)zirconium dimethyl, bis(1,2-dimethylcyclopentadienyl)zirconium dimethyl and mono and dihalide and hydride complexes of the above; silicon, phosphorus, and carbon bridged cyclopentadiene complexes such as dimethylsilyldicyclopentadienyl zirconium dimethyl, methyl halide or dihalide, and methylene dicyclopentadienyl zirconium dimethyl, methyl halide, or dihalide. Mono, di and tri-silyl substituted cyclopentadienyl compounds such as bis(trimethylsilylcyclopentadienyl)zirconium dichloride and dimethyl bis(1,3-di-trimethylsilylcyclopentadienyl)zirconium dichloride and dimethyl and bis (1,2,4-tri-trimethylsilylcyclopentadienyl)zirconium dichloride and dimethyl. Carbenes represented by the formulae

$Cp_2Zr{=}CH_2P(C_6H_5)_2CH_3$, and derivatives of these compounds such as

$$Cp_2\overline{ZrCH_2CH(CH_3)C}H_2.$$

Mixed cyclopentadienyl metallocene compounds such as cyclopentadienyl (pentamethyl cyclopentadienyl) zirconium dichloride, (1,3-di-trimethylsilylcyclopentadienyl) (pentamethylcyclopentadienyl) zirconium dichloride, and cyclopentadienyl(indenyl) zirconium dichloride can be employed.

Bis(cyclopentadienyl)hafnium dichloride, bis(cyclopentadienyl)hafnium; dimethyl, bis(cyclopentadienyl)vanadium dichloride are illustrative of other metallocenes.

Some preferred metallocenes are bis(cyclopentadienyl)zirconium; dimethyl, bis(cyclopentadienyl)zirconium dichloride; bis(cyclopentadienyl)titanium dichloride; bis(methylcyclopentadienyl) zirconium dichloride; bis(methylcyclopentadienyl)titanium dichloride; bis(n-butylcyclopentadienyl)zirconium dichloride; dimethylsilyldicyclopentadienyl zirconium dichloride; bis(trimethylsilycyclopentadienyl)zirconium dichloride; and dimethylsilyldicyclopentadienyl titanium dichloride; bis(indenyl)zirconium dichloride; bis(4,5,6,7-tetrahydroindenyl)zirconium dichloride; the racemic and/or meso isomer of 1,2-ethylene-bridged bis(4,5,6,7-tetrahydroindenyl)zirconium dichloride; the racemic and/or meso isomer of 1,1-dimethylsilyl-bridged bis(4,5,6,7-tetrahydroindenyl)zirconium dichloride; and the racemic and/or meso isomer of 1,1-dimethylsilyl-bridged bis(methylcyclopentadienyl)zirconium dichloride.

The alumoxane compounds useful in the polymerization process may be cyclic or linear. Cyclic alumoxanes may be represented by the general formula $(R\text{-}Al\text{-}O)_n$ while linear alumoxanes may be represented by the general formula $R(R\text{-}Al\text{-}O)n'AlR_2$. In the general formula R is a $C_1$-$C_5$ alkyl group such as, for example, methyl, ethyl, propyl, butyl and pentyl, n is an integer of from 3 to 20, and n' is an integer from 1 to about 20. Preferably, R is methyl and n and n' are 4-18. Generally, in the preparation of alumoxanes from, for example, aluminum trimethyl and water, a mixture of the linear and cyclic compounds is obtained.

The alumoxanes can be prepared in various ways. Preferably, they are prepared by contacting water with a solution of aluminum trialkyl, such as, for examples, aluminum trimethyl, in a suitable organic solvent such as toluene or an aliphatic hydrocarbon. For example, the aluminum alkyl is treated with water in the form of a ùoist solvent. In an alternative method, the aluminum alkyl such as aluminum trimethyl can be desirably contacted with a hydrated salt such as hydrated copper sulfate or ferrous sulfate. Preferably, the alumoxane is prepared in the presence of a hydrated ferrous sulfate. The method comprises treating a dilute solution of aluminum trimethyl in, for example, toluene, with ferrous sulfate represented by the general formula $FeSO_4.7H_2O$. The ratio of ferrous sulfate to aluminum trimethyl is desirably 1 mole of ferrous sulfate for 6 to 7 moles of aluminum trimethyl. The reaction is evidenced by the evolution of methane.

The mole ratio of aluminum in the alumoxane to total metal in the metallocenes which can be usefully employed can be in the range of 0.5:1 to 1000:1, and desirably 1:1 to 100:1. Preferably, the mole ratio will be in the range of 50:1 to 5:1 and most preferably 20:1 to 5:1.

The solvents used in the preparation of the catalyst system are inert hydrocarbons, in particular a hydrocarbon that is inert with respect to the catalyst system. Such solvents are well known and include, for example, isobutane, butane, pentane, hexane, heptane, octane, cyclohexane, methylcyclohexane, toluene, xylene and the like.

Polymerization is generally conducted at temperatures ranging between 20° and 300°C, preferably between 30° and 200°C. Reaction time is not critical and may vary from several hours or more to several minutes or less, depending upon factors such as reaction temperature, the monomers to be copolymerized. One of ordinary skill in the art may readily obtain the optimum reaction time for a given set of reaction parameters by routine experimentation.

The catalyst systems described heroin are suitable for the polymerization of olefins in solution over a wide range of pressures. Preferably, the polymerization will be completed at a pressure of from 10 to 3,000 bar, and generally at a pressure within the range from 40 bar to 2,000 bar, and most preferably, the polymerization will be completed at a pressure within the range from 50 bar to 1,500 bar.

After polymerization and, optionally, deactivation of the catalyst (e.g., by conventional techniques such as contacting the polymerization reaction medium with water or an alcohol, such as methanol, propanol, and isopropanol, or cooling or flashing the medium to terminate the polymerization reaction), the product polymer can be recovered by processes well known in the art. Any excess reactants may be flashed off from the polymer.

The polymerization may be conducted employing liquid monomer, such as liquid propylene, or mixtures of liquid monomers (such as mixtures of liquid propylene and 1-butene), as the reaction medium. Alternatively, polymerization may be accomplished in the presence of a hydrocarbon inert to the polymerization such as butane, pentane, isopentane, hexane, isooctane, decane, toluene, xylene.

In those situations wherein the molecular weight of the polymer product that would be produced at a given set of operating conditions is higher than desired, any of the techniques known in the prior art for control of molecular weight,

such as the use of hydrogen and/or polymerization temperature control, may be used in the process of this invention. If so desired, the polymerization may be carried out in the presence of hydrogen to lower the polymer molecular weight. Care should be taken to assure that terminal ethenylidene unsaturation is not reduced to less than 30 percent of the polymer chains.

However, the polymers are preferably formed in the substantial absence of added $H_2$ gas, that is, the absence of $H_2$ gas added in amounts effective to substantially reduce the polymer molecular weight. More preferably, the polymerizations will be conducted employing less than 5 wppm, and more preferably less than 1 wppm, of added $H_2$ gas, based on the moles of the ethylene monomer charged to the polymerization zone.

When carrying out the polymerization in a batch-type fashion, the reaction diluent (if any), ethylene and alpha-olefin comonomer(s) are charged at appropriate ratios to a suitable reactor. Care must be taken that all ingredients are dry, with the reactants typically being passed through molecular sieves or other drying means prior to their introduction into the reactor. Subsequently, either the catalyst and then the cocatalyst, or first the cocatalyst and then the catalyst are introduced while agitating the reaction mixture, thereby causing polymerization to commence. Alternatively, the catalyst and cocatalyst may be premixed in a solvent and then charged to the reactor. As polymer is being formed, additional monomers may be added to the reactor. Upon completion of the reaction, unreacted monomer and solvent are either flashed or distilled off, if necessary by vacuum, and the low molecular weight copolymer withdrawn from the reactor.

The polymerization may be conducted in a continuous manner by simultaneously feeding the reaction diluent (if employed), monomers, catalyst and cocatalyst to a reactor and withdrawing solvent, unreacted monomer and polymer from the reactor so as to allow a residence time of ingredients long enough for forming polymer of the desired molecular weight and separating the polymer from the reaction mixture.

Referring now to moiety B, this is a polymer and should, as indicated, have a number average molecular weight of at least 800, and advantageously has a molecular weight in the range of from 900 to 5000, preferably 900 to 2000. Advantageously, the molecular weights of moieties A and B are similar, for example one may be up to 4 times that of the other and preferably one is within the range of 75% to 125% of the other. If the molecular weights differ, that of B is advantageously greater than A. The B moiety may be terminally linked to the A moiety, or it may be linked to the A moiety at a location in the B moiety between its ends. The latter will result if, for example, the A moiety is terminated by a succinic acid, which may bond to one molecule of a polymeric secondary amine to form an amide or an amine salt; in cases of this type it is the sum of the molecular weights of the polymeric groups attached to the nitrogen atom that is referred to above. The polymer chains of the parts of the B moiety may be branched or have pendent groups, and also they may have different chain lengths. It is within the scope of the invention to have more than one chain forming the B moiety, as will result from the reaction of two moles of a long chain or polymeric primary or secondary amine with a succinic acid terminated moiety, giving two and four portions of the B moiety respectively. The polymeric portion of moiety B is per se oil-soluble, and is preferably per se soluble in the oil to be treated. To this end, the polymer is of low crystallinity and is preferably amorphous. The chain may be a hydrocarbon chain, advantageously an aliphatic, saturated or unsaturated hydrocarbon chain.

The polymers for forming moiety B are polymers comprising a major amount of $C_2$ to $C_{10}$, e.g. $C_2$ to $C_5$, monoolefin. Such olefins include ethylene, propylene, butylene, pentene, octene-1,styrene, etc. although the crystallinity of polyethylene renders ethylene unsuitable as a sole monomer. The polymers may be homopolymers, for example, polyisobutylene, or copolymers of two or more such olefins such as copolymers of ethylene and propylene; butylene and isobutylene; or propylene and isobutylene.

Advantageously, however, moiety B is derived from a polyisobutylene.

By way of example, the preparation of a product in which an electrophilic group in the form of an acid located on the ethylene propylene polymer of moiety A is linked to a nucleophilic group one in the form of an amine, on the polymer of moiety B will be discussed in more detail.

An ethylene-propylene polymer substituted mono-or dicarboxylic acid material, i.e., acid, anhydride or acid ester used in this invention, may be the reaction product of an ethylene-propylene polymer with a monounsaturated carboxylic reactant comprising at least one member selected from (i) monounsaturated $C_4$ to $C_{10}$ dicarboxylic acid wherein (a) the carboxyl groups are vicinal, and (b) at least one, preferably both, of said adjacent carbon atoms are part of said monounsaturation; (ii) derivatives of (i) such as anhydrides; (iii) monounsaturated $C_3$ to $C_{10}$ monocarboxylic acids wherein the carbon-carbon double bond is allylic to the carboxy group.

Upon reaction with the polymer, the monounsaturation of the monounsaturated carboxylic reactant becomes saturated. Thus, for example, maleic anhydride becomes a polymer substituted succinic anhydride, and acrylic acid becomes a polymer substituted propionic acid.

Typically, from 0.7 to 4.0 (e.g., 0.8 to 2.6), preferably from 1.0 to 2.0, and most preferably from 1.1 to 1.7 moles of said monounsaturated carboxylic reactant are charged to the reactor per mole of polymer charged.

Normally, not all of the polymer reacts with the monounsaturated carboxylic reactant and the reaction mixture will contain unreacted polymer. The unreacted polymer is typically not removed from the reaction mixture (because such

removal is difficult and would be commercially infeasible) and the product mixture, stripped of any monounsaturated carboxylic reactant is employed for further reaction with the amine as described hereinafter to make the product.

Characterization of the average number of moles of monounsaturated carboxylic reactant which have reacted per mole of polymer charged to the reaction (whether it has undergone reaction or not) is defined herein as functionality. Said functionality is based upon (i) determination *of* the saponification number of the resulting product mixture using potassium hydroxide; and (ii) the number average molecular weight of the polymer charged, using techniques well known in the art. Functionality is defined solely with reference to the resulting product mixture. Although the amount of said reacted polymer contained in the resulting product mixture can be subsequently modified, i.e. increased or decreased by techniques known in the art, such modifications do not alter functionality as defined above. The terms ethylene-alpha-olefin polymer substituted monocarboxylic acid material and ethylene-alpha-olefin polymer substituted dicarboxylic acid material are intended to refer to the product mixture whether it has undergone such modification or not.

Accordingly, the functionality of the ethylene-alpha-olefin polymer substituted mono- and dicarboxylic acid material will be typically at least 0.5, preferably at least 0.8, and most preferably at least 0.9 and will vary typically from 0.5 to 2.8 (e.g., 0.6 to 2), preferably from 0.8 to 1.4, and most preferably from 0.9 to 1.3.

Exemplary of such monounsaturated carboxylic reactants are fumaric acid, itaconic acid, maleic acid, maleic anhydride, chloromaleic acid, chloromaleic anhydride, acrylic acid, methacrylic acid, crotonic acid, cinnamic acid, and lower alkyl (e.g., $C_1$ to $C_4$ alkyl) acid esters of the foregoing, e.g., methyl maleate, ethyl fumarate, methyl fumarate, etc.

The polymer can be reacted with the monounsaturated carboxylic reactant by a variety of methods. For example, the polymer can be first halogenated, chlorinated or brominated to 1 to 8 wt. %, preferably 3 to 7 wt. % chlorine, or bromine, based on the weight of polymer, by passing the chlorine or bromine through the polymer at a temperature of 60 to 250°C, preferably 110 to 160°C, e.g. 120 to 140°C, for 0.5 to 10, preferably 1 to 7 hours. The halogenated polymer may then be reacted with sufficient monounsaturated carboxylic reactant at 100 to 250°C, usually 180° to 235°C, for 0.5 to 10, e.g. 3 to 8 hours, so the product obtained will contain the desired number of moles of the monounsaturated carboxylic reactant per mole of the halogenated polymer. Processes of this general type are taught in U.S. Patents 3,087,436; 3,172,892; 3,272,746 and others. Alternatively, the polymer and the monounsaturated carboxylic reactant are mixed and heated while adding chlorine to the hot material. Processes of this type are disclosed in U.S. Patents 3,215,707; 3,231,587; 3,912,764; 4,110,349; 4,234,435; and in U.K. 1,440,219.

While chlorination normally helps increase the reactivity of polyolefins with monounsaturated carboxylic reactant, it is not necessary with the present polymers due to their high terminal bond content and reactivity. Preferably, therefore, the polymer and the monounsaturated carboxylic reactant are contacted at elevated temperature to cause a thermal "ene" reaction to take place. Thermal "ene" reactions have been heretofore described in U.S. Patents 3,361,673 and 3,401,118. It has been surprisingly found that the terminally ethylenically-unsaturated ethylene alpha-olefin polymers used in this invention readily undergo such thermal "ene" reactions under conditions in which the formation of sediment, or other by-products contributing to product haze, is greatly minimized or avoided altogether. The improved low sediment ene reaction product mixture is preferably formed using an ethylene-propylene copolymer having a number average molecular weight of from 1000 to 10,000, more preferably from 1500 to 10,000, and most preferably greater than 1800 to 5,000, and a polydispersity of less than 4, preferably less than 3, e.g., from 1.1 to 3.5, most preferably from 1.2 to 3.

Preferably, the polymers used in this invention contain less than 5 wt%, more preferably less than 2 wt%, and most preferably less than 1 wt% of a polymer fraction comprising polymer molecules having a molecular weight of less than 300, as determined by high temperature gel premeation chromatography employing the corresponding polymer calibration curve. Such preferred polymers have been found to permit the preparation of ene reaction products, particularly when employing maleic anhydride as the unsaturated acid reactant, with substantially no visibly observable sediment. In the event the polymer produced as described above contains greater than 5 wt% of such a low molecular weight polymer fraction, the polymer can be first treated by conventional means to remove the low molecular weight fraction to the desired level prior to initiating the ene reaction, and preferably prior to contacting the polymer with the selected unsaturated carboxylic reactant(s) . For example, the polymer can be heated preferably with inert gas (e.g., nitrogen) stripping, at elevated temperature under a reduced pressure to volatilize the low molecular weight polymer components which can then be removed from the heat treatment vessel. The precise temperature, pressure and time for such heat treatment can vary widely depending on such factors as as the polymer number average molecular weight, the amount of the low molecular weight fraction to be removed, the particular monomers employed and other factors. Generally, a temperature of from 60 to 100°C and a pressure of from 0.1 to 0.9 atmospheres and a time of from 0.5 to 20 hours (e.g., 2 to 8 hours) will be sufficient.

In this process, the selected polymer and monounsaturated carboxylic reactant are contacted for a time and under conditions effective to form the desired ethylene alpha-olefin polymer substituted mono- or dicarboxylic acid material. Generally, the polymer and monounsaturated carboxylic reactant will be contacted in a polymer to unsaturated carboxylic reactant mole ratio usually from 1:1 to 1:10, and preferably from 1:1 to 1:5, at an elevated temperature, generally from 120 to 260°C, preferably from 160 to 240°C. The reaction will be generally carried out, with stirring, for a time of

from 1 to 20 hours, preferably from 2 to 6 hours. The reaction is preferably conducted in the substantial absence of $O_2$ and water (to avoid competing side reactions), and to this end can be conducted in an atmosphere of dry $N_2$ gas or other gas inert under the reaction conditions. The reactants can be charged separately or together as a mixture to the reaction zone, and the reaction can be carried out continuously, semi-continuously or batchwise. Although not generally necessary, the reaction can be carried out in the presence of a liquid diluent or solvent, e.g., a hydrocarbon diluent such as mineral lubricating oil, toluene, xylene, dichlorobenzene. The polymer substituted mono- or dicarboxylic acid material thus formed can be recovered from the liquid reaction mixture, e.g., after stripping the reaction mixture, if desired, with an inert gas such as $N_2$ to remove unreacted unsaturated carboxylic reactant.

The "ene" reaction product mixture thereby obtained has been surprisingly found to have a substantially reduced content of sediment or other solid by-products as impurities and can be employed, without filtering, centrifuging, clarification, phase separation or other conventional product purification treatments, as, e.g., an additive to lubricating oils or as intermediate in the preparation of derivative products for use in lubricating oils, as will be more completely described hereinafter.

The ene reaction product mixture is further improved by being substantially free of chlorine, that is, by having a chlorine content of less than 25 ppm by weight, preferably less than 10 ppm by weight.

The ene reaction product mixture comprising the desired ethylene- propylene substituted mono- or dicarboxylic acid material (e.g., ethylene-propylene polymer-substituted succinic anhydride) formed by the process of this invention will generally contain unreacted polymer, (that is, polymer which is unsubstituted by the mono- or dicarboxylic acid moiety), in a concentration of less than 40 wt.% (e.g., from 5 to 35 wt.%), more preferably less than 30 wt.% (e.g from 10 to 25 wt.%) and will be generally characterized by a VR value ("viscosity ratio$^n$ value) of not greater than 4.1, usually not greater than 4.0, preferably from 2.0 to 3.9, and most preferably from 3.0 to 3.8. As used herein, the term "VR value" is intended to mean quotient determined by the expression (IV):

$$VR = \frac{VISb}{VISa}$$

wherein VISa is the kinematic viscosity (KV) of the ene reaction product mixture at 100°C in units of centistokes (as determined by ASTM Method No. D445) and VISb is the cold cranking simulator (CCS) viscosity of the ene reaction product mixture at -20°C in units of poise (as determined by ASTM Method No. D2602), wherein the measurements are made upon a 2 wt% solution of the ene reaction product mixture in an oil (herein termed the "reference oil") comprising S150N (solvent 150 neutral) mineral lubricating oil (Exxon Company U.S.A.), wherein the such reference oil is characterized by an ASTM D445 kinematic viscosity of 5.2′ cSt (100°C) and an ASTM D2602 CCS viscosity of 19.2 poise (± 0.4 poise) (at -20°C). The "$VR_r$" value of the reference oil will then be about 3.7 ± 0.1.

Illustrative of the ene reaction products suitable for use in this invention are the following ethylene-propylene copolymer-substituted succinic acids and succinic anhydrides (EPSA).

TABLE A

| Ene Product | Polymer (Mn) | Residual Halide (wppm) | Wt. % ai (1) | SA:Polymer Mole Ratio (2) | VR) Value (3) |
|---|---|---|---|---|---|
| EPSA | 1000-10,000 | ≤ 25 | ≥ 60 | ≥ 0.7:1 | ≤ 4.1 |
| EPSA | 1000-10,000 | ≤ 10 | ≥ 60 | ≥ 1.0:1 | ≤ 4.0 |
| EPSA | 1000-5,000 | ≤ 25 | ≥ 60 | ≥ 0.7:1 | ≤ 4.1 |
| EPSA | 1000-5,000 | ≤ 10 | ≥ 60 | ≥ 1.0:1 | ≤ 4.0 |
| EPSA | 5,500-10,000 | ≤ 25 | ≥ 60 | ≥ 0.7:1 | ≤ 4.1 |
| EPSA | 5,500-10,000 | ≤ 10 | ≥ 70 | ≥ 0.7:1 | ≤ 4.0 |
| EPSA | 1,500-10,000 | ≤ 10 | 70-90 | ≥ 1.0:1 | ≤ 4.1 |

NOTES:
(1) Wt.% active ingredient.
(2) SA=succinic anhydride; polymer=ethylene-propylene (EP) copolymer; moles of polymer in ratio based on the total of both the reacted and unreacted polymer; moles of "SA" based on the number of moles of succinic anhydride moieties per mole of ene reaction product.

The two components are readily reacted in solution at a temperature in the range of 60° to 150°C, preferably 70 to 120°C, generally for 1 to 10, e.g., 2 to 6 hours until the desired amount of water is removed. The heating may be carried out to favor formation of imides, of mixtures of imides and amides, or of amides and salts, whichever type of reaction product is desired.

Reactant ratios of polymer substituted mono- and dicarboxylic acid material to equivalents of amine can vary considerably, depending on the reactants and type of bonds formed. When the polymer comprises a polymer substituted dicarboxylic acid material, containing dicarboxylic acid producing moieties derived from any of the above monounsaturated dicarboxylic acids, or anhydride or ester derivatives thereof, generally from 0.5 to 1.0 mole of dicarboxylic acid moiety content (e.g. grafted maleic anhydride content) is used, per equivalent of nucleophilic reactant amine.

When the polymer comprises a polymer substituted monocarboxylic acid material, containing monocarboxylic acid producing moieties derived from any of the above monounsaturated monocarboxylic acids, or ester derivatives thereof, generally 1.0 mole of monocarboxylic acid moiety content (e.g., grafted acrylic acid content) is used, per equivalent of nucleophilic reactant amine.

The block copolymer AB has excellent solubility in various fuel oils, especially middle distillate fuel oils, improving their low temperature flowability, in particular lowering pour point and inhibiting wax settling. Examples of fuel oils to which the copolymer may usefully be added are straight run or cracked gas oil, and blends in any proportion of straight run and thermally or catalytically cracked distillate.

Accordingly, the present invention also provides a fuel oil composition comprising the copolymer AB as defined above. Advantageously the copolymer AB is present in a proportion of from 0.005 to 0.5%, preferably from 0.01 to 0.1%, by weight, based on the weight of the fuel oil.

The present invention further provides a fuel oil additive concentrate comprising 2 to 90%, advantageously 5 to 50%, by weight of the copolymer AB, as defined above, in fuel oil or in a solvent miscible with fuel oil.

Also provided by the invention is the use of the copolymer AB, as defined above, as a wax crystal modifier in a fuel oil.

The copolymer AB may be used in a fuel oil as the sole additive. It may, however, be used in association with other low temperature flow improvers, for example the amide/amine salt reaction product of a carboxylic acid or anhydride and a hydrocarbyl substituted amine, for example, phthalic acid and dihydrogenated tallow amine; a "comb" polymer, for example a copolymer of an alpha-olefin or vinyl acetate and the maleic or fumaric esters of e.g., a $C_{10}$ to $C_{18}$ n-alkyl alcohol; or an ethylene-vinyl ester copolymer, for example, an ethylene-vinyl acetate copolymer.

The following examples illustrate the invention:

EXAMPLE 1 - Preparation of Ethylene-Propylene Copolymer.

A 1 liter Zipperclave reactor (Autoclave Engineers) equipped with a water jacket for temperature control, with a septum inlet for syringe injection of catalyst, and with a supply of purified nitrogen, liquid propylene, and ethylene was used used in these polymerizations. The reactor was cleaned with hot toluene and then was purged well with dry nitrogen at 100°C. The reactor was cooled to 25°C and 10.0 cc of a 4.0 wt% toluene solution of methylalumoxane was injected along with 100 cc of distilled toluene at 0 psig under nitrogen. Liquid propylene monomer (200 cc) was added from a calibrated burette at 25°C. The reactor contents were stirrred and heated to 115°C at which point the reactor pressure was 375 psig. 1.00 cc of a toluene solution of bis(n-butylcyclopentadienyl) zirconium dichloride (1.00 mg) was injected and ethylene at a pressure of 405 psig was immediately supplied. Ethylene was fed on pressure demand in order to keep the system pressure at 405 psig. The rate of ethylene flow was recorded continuously during the course of the polymerization. The reaction was continued for 15 minutes after which the reaction was stopped by rapidly depressuring and cooling the reactor to 25°C. The polymer product was collected and the toluene solvent was evaporated in an air stream. The polymer weight was determined to be 103.1 gms, and the polymer was analyzed by size-exclusion chromatography and found to contain 68 wt% ethylene and to have a number average molecular weight of 1100, a weight average molecular weight of 5400 and a polydispersity of 4.9. The polymer product was found to contain 2.5 wppm Zr and 1.75 wppm Cl.

EXAMPLE 2 - Preparation of Ethylene-Propylene Copolymer.

The polymerization was performed as in Example 1 except that the reactor temperature was maintained at 100°C and 1.00 mg of dimethylsilyldicyclopentadienyl zirconium dichoride was used as catalyst instead of bis(n-butylcyclopentadienyl) zirconium dichloride. The reactor pressure was maintained at 380 psig by a regulated ethylene supply. The yield of the copolymer was 111.2 gms and the polymer was determined to contain the ethylene content indicated in Table I and to have a number average molecular weight of 1390, a weight average molecular weight of 4030 and polydispersity of 2.9. The polymer product was found to contain 2.0 wppm Zr and 1.5 wppm Cl.

EXAMPLE 3 - Preparation of Ethylene-Propylene Copolymer.

The polymerization was performed as in Example 2 except that the reactor temperature was maintained at 90°C and 270 cc of liquid propylene was charged. The reactor pressure was maintained by a regulated ethylene supply. The yield of the copolymer was 16.3 gms and the polymer was determined to contain the ethylene content indicated in Table I and to have a number average molecular weight of 1750, a weight average molecular weight of 4960 and polydispersity of 2.8. The polymer product was found to contain 16 wppm Zr and 10 wppm Cl.

EXAMPLE 4 - Preparation of Ethylene-Propylene Copolymer.

The polymerization was performed as in Example 3 except that the reactor temperature was maintained at 80°C. The reactor pressure was maintained at 365 psig by a regulated ethylene supply for 1 hour. The yield of the copolymer was 234 gms and the polymer was determined to have a number average molecular weight of 2710, a weight average molecular weight of 7980 and polydispersity of 2.9. The polymer product was found to contain the ethylene content indicated in Table I and to contain 1.0 wppm Zr and 0.7 wppm Cl.

EXAMPLE 5 - Preparation of Ethylene Butene-1 Copolymer.

The polymerization was performed as in Example 3 except that 270 cc of liquid butene-1 was charged instead of the propylene. The reactor pressure was maintained at 167 psig by a regulated ethylene supply. The yield of the copolymer was 176.6 gms and the polymer was determined to have a number average molecular weight of 860, a weight average molecular weight of 2710 and polydispersity of 3.1. The polymer product was found to contain 1.5 wppm Zr and 1.1 wppm Cl.

EXAMPLES 6-10 - Preparation of Ethylene-Propylene Copolymer Substituted Succinic Anhydride (EPSA)

In a series of runs, the selected moles of the EP copolymers prepared as above and pulverized maleic anhydride are charged under dry $N_2$ at atmospheric pressure to a 100 ml. pressure reactor equipped with a stirrer and a thermocouple and heated by means of an electric heating mantle. No added solvent or diluent for the reactants is employed. Rather the reaction is conducted in the melt. In each run, the reaction mixture is heated to 70°C and the reactor is gently purged with dry $N_2$ by bubbling through the liquid reaction mass for 15 minutes. The purging is then ceased and the reactor temperature is raised to 220°C and kept at that temperature under autogenous pressure for 4 hours while stirring. The liquid reaction mixture is then cooled to about 60°C, and transferred to a glass beaker. Dry gaseous nitrogen is passed through the liquid to strip off unreacted maleic anhydride at about 140°C until no trace of maleic anhydride is detected with IR. The liquid product containing the EPSA and unreacted EP is analyzed for succinic anhydride by the following titration technique: a 2 g. sample of the polymer is dissolved in a solvent comprising 80 ml of THF, 6 ml of pyridine and 0.3 ml of water and titrated with a methanol solution of tetrabutyl ammonium hydroxide using thymol blue to a color end point. The acidity is calculated from the milliliters of base solution used. The product is also observed to determine the presence of any sediment.

Table I

| Example | Feed: EP Copolymer | Feed: Copolymer As Prepared In Example | Feed: Mol. Ratio of EP to MA Charged | Titration of Succinic Acid in the EPSA (or EP/PIB-SA) Product, Meq/gram: Theor. | Found | % Conv.(3) | Sediment(4) |
|---|---|---|---|---|---|---|---|
| 6 | $\bar{M}_n$ = 1100, 68 wt.% $C_2^=$ | 1 | 1/1.2 | 0.91 | 0.73 | 80.3 | moderate |
| 7 | $\bar{M}_n$ = 1390, 56 wt.% $C_2^=$ | 2 | 1/1.2 | 0.72 | 0.65 | 89.3 | moderate |
| 8 | $\bar{M}_n$ = 1750, 59 wt.% $C_2^=$ | 3 | 1/1.2 | 0.57 | 0.43 | 75.4 | none |
| 9 | $\bar{M}_n$ = 2710, 55 wt.% $C_2^=$ | 4 | 1/1.2 | 0.37 | 0.31 | 83.8 | none |
| 10 | $\bar{M}_n$ = 2710, 55 wt.% $C_2^=$ | 4 | 1/3.2 | 0.37 | 0.56 | 150 | slight |

NOTES: EP - ethylene-propylene copolymer; MA = maleic anhydride.

(1) EP $\bar{M}_n$ = 2710, 55 wt.% $C_2^=$; PIB $\bar{M}_n$ = 1200.

(2) (EP + PIB)/MA = 1.0:1.2 mole ratio charged.

(3) Based on (theoretical - found) meq/gm SA.

(4) Low amounts of sediment not quantified.

Example 11 - Preparation of the polyisobutylene amine

Polyisobutylene, of number average molecular weight 902, and viscosity at 100°C of 219 cSt (2.19 x $10^{-4}m^2/s$), was chlorinated at 120°C-130°C for 6 hours to introduce an average of one chlorine atom per polymer chain. The resulting ClPIB, consisting mainly of allylic halides, is treated with ethylene diamine (10 parts of amine per part of ClPIB) at about 118°C for 5 hours. Remaining amine is distilled off under vacuum, then the product is treated with an aqueous $Na_2CO_3$ solution to release residual amine from its salt. Water and amine are stripped off with nitrogen under vacuum and the product filtered.

Examples 12 to 14 - Preparation of Product

2.00 g of EPSA, produced as described in Examples 6 to 10, were dissolved in 40 ml dry Solvesso 150. Separately 4.84 g of a 60% by weight solution of the product of Example 11 in Solvesso 150 was further diluted with 20 ml of dry Solvesso 150, mixed with the EPSA solution and reacted for 2 hours at 75°C under a dry nitrogen atmosphere.

The resulting products all showed an IR peak at 1610 $cm^{-1}$, indicating the presence of the amide/amine salt.

The starting EPSA's had the following characteristics:

| Example | Mn | % Propene | Moles SA per EPC |
|---|---|---|---|
| 12 | 1440 | 53 | 1.1 |
| 13 | 1065 | 53 | 1.0 |
| 14 | 727 | 59 | 1.1 |

In a similar procedure 2.00 g of EPSA was treated with 2.42 g of the Example 11 product solution, and reacted at 120°C. The resulting product showed an IR peak at 1710 $cm^{-1}$, indicating imide groups.

ExamDle 15

In this Example, the Programmed Cooling Test (PCT) Filterablity of Fuel Oil 80126/89 was measured using various additives at a treat rate of 200 ppm. In the PCT test, the fuel oil is cooled at 1°C per hour to -20°C, at which temperature the fuel is passed through a series of meshes of increasing fineness - through 60, 80, 100, 120, 150, 200, 250, 350, VW, LTFT, and 500 mesh, and the finest mesh passed is noted.

The Cold Filter Plugging Points (CFPP) of the compositions described above were also measured using the test described in BS 2869, and in "Journal of the Institute of Petroleum", 52 (1966) 173 to 185, the disclosures of which are incorporated by reference herein. The results of the PCT and CFPP tests are shown in the Table below. The PCT test results are given in terms of the finest mesh passed while the CFPP test results are given in terms of the temperature at which the filter becomes blocked by wax.

| Additive | Finest Mesh Passed | CFPP,°C |
|---|---|---|
| None | failed 60 | -13 |
| EPC of Example 12 (Comparative) | 150 | -17 |
| EPSA of Example 12 (") | 150 | -12 |
| EPSA of Example 13 (") | 150 | |
| EPSA of Example 14 (") | 200 | |
| PIB amine of Example 11 (") | failed 60 | |
| 1:1 Physical Mixture of EPSA and PIB amine, 1:1 (") | 120 | -13 |
| Do, 1:2 (") | | -14 |
| EPSAPIB amine (Example of the invention) | 500 | -16 |

The results show the enhanced filterability of an oil product containing the additive according to the invention, compared with one containing a physical mixture of its starting materials or one containing other additives; the CFPP is comparable with that containing the ethylenepropylene copolymer which fuel composition, however, has a poor filterability.

## Claims

1. A block copolymer of the formula AB, wherein;

   (i) moiety A is derived from an ethylene-alpha olefin copolymer having a number average molecular weight of from 1000 to 10000 at least 30% of the copolymer chains of which contain terminal ethenylidene unsaturation, the moiety bearing a terminal electrophilic group derived from an acid substituent; and

   (ii) moiety B has a number-average molecular weight of at least 800 and is derived from a oil-soluble polymer comprising a major amount of $C_2$ to $C_{10}$ monoolefin, the moiety bearing a nucleophilic group being from an amine;

   the link between the moieties being the product of one or more reactions between the electrophilic and nucleophilic groups.

2. A copolymer as claimed in claim 1, wherein moiety A is derived from an ethylene propylene copolymer.

3. A copolymer as claimed in claim 1 or 2, wherein the molar ethylene content of moiety A is in the range of between 20 and 80 percent, and preferably between 30 and 70 percent.

4. A copolymer as claimed in any one of claims 1 to 3, wherein polymer moiety A is a polymer possessing a number average molecular weight (Mn) of from 1000 to 5000,

5. A copolymer as claimed in claim 4, wherein polymer moiety A is a polymer possessing an Mn of from 1500 to 3000.

6. A copolymer as claimed in any one of claims 1 to 5, wherein moiety A is derived from a copolymer obtained by polymerization in the presence of a catalyst system comprising at least one metallocene and an alumoxane compound.

7. A copolymer as claimed in any one of claims 1 to 6, wherein moiety B has an Mn in the range of from 900 to 5000.

8. A copolymer as claimed in any one of claims 1 to 7, wherein the molecular weight of one of moieties A and B is within the range of 75% to 125% of the other.

9. A copolymer as claimed in any one of claims 1 to 8, wherein more than one chain forms the B moiety.

10. A copolymer as claimed in any one of claims 1 to 9, wherein moiety B is derived from polyisobutylene.

11. A copolymer as claimed in claim 10, which is derived from an ethylene-propylene polymer succinic acid or anhydride and a polyisobutylene amine.

12. A fuel oil composition comprising a copolymer AB as defined in any one of claims 1 to 11.

13. A composition as claimed in claim 12, wherein the copolymer AB is present in a proportion of from 0.005 to 0.5% by weight, based on the weight of the fuel oil.

14. A fuel oil additive concentrate comprising 2 to 90% by weight of a copolymer AB, as defined in any one of claims 1 to 11, in fuel oil or in a solvent miscible with fuel oil.

15. The use of a copolymer AB, as defined in any one of claims 1 to 11, as a wax crystal modifier in a fuel oil.

16. The composition or concentrate as claimed in any one of claims 12 to 14, wherein the copolymer AB is present in association with one or more other low temperature flow improvers.

17. The composition or concentrate as claimed in claim 16, wherein the other low temperature flow improver is one or more of: the amide/amine salt reaction product of a carboxylic acid or anhydride and a hydrocarbyl substituted amine: a "comb" polymer, or an ethylene-vinyl ester copolymer.

## Patentansprüche

1. Blockcopolymer mit der Formel AB, in dem

    (i) Anteil A von einem Ethylen/α-Olefin-Copolymer mit einem durchschnittlichen Molekulargewicht (Zahlenmittel) von 1000 bis 10 000 abgeleitet ist, bei dem mindestens 30 % der Copolymerketten endständige Ethenyliden-Ungesättigtheit enthalten, wobei der Anteil eine von einem Säuresubstituenten abgeleitete endständige elektrophile Gruppe enthält; und

    (ii) Anteil B ein durchschnittliches Molekulargewicht (Zahlenmittel) von mindestens 800 hat und von einem öllöslichen Polymer abgeleitet ist, das eine größere Menge $C_2$- bis $C_{10}$-Monoolefin umfaßt, wobei der Anteil eine nukleophile Amingruppe oder eine von einem Amin abgeleitete nukleophile Gruppe trägt,

    wobei die Verbindung zwischen den Anteilen das Produkt aus einer oder mehreren Umsetzungen zwischen den elektrophilen und nukleophilen Gruppen ist.

2. Copolymer nach Anspruch 1, bei dem Anteil A von einem Ethylen/Propylen-Copolymer abgeleitet ist.

3. Copolymer nach Anspruch 1 oder 2, bei dem der molare Ethylengehalt von Anteil A im Bereich zwischen 20 und 80 % und vorzugsweise zwischen 30 und 70 % liegt.

4. Copolymer nach Anspruch 1 bis 3, bei dem Polymeranteil A ein Polymer ist, das ein durchschnittliches Molekulargewicht (Zahlenmittel) ($\overline{M}_n$) von 1000 bis 5000 besitzt.

5. Copolymer nach Anspruch 4, bei dem Polymeranteil A ein Polymer ist, das ein $\overline{M}_n$ von 1500 bis 3000 besitzt.

6. Copolymer nach einem der Ansprüche 1 bis 5, bei dem Anteil A von einem Copolymer abgeleitet ist, das durch Polymerisation in Gegenwart eines Katalysatorsystems erhalten worden ist, das mindestens ein Metallocen und eine Alumoxanverbindung umfaßt.

7. Copolymer nach einem der Ansprüche 1 bis 6, bei dem Anteil B ein $\overline{M}_n$ im Bereich von 900 bis 5 000 aufweist.

8. Copolymer nach einem der Ansprüche 1 bis 7, bei dem das Molekulargewicht von einem der Anteile A und B im Bereich von 75 % bis 125 % des anderen liegt.

9. Copolymer nach einem der Ansprüche 1 bis 8, bei dem mehr als eine Kette den B-Anteil bildet.

10. Copolymer nach einem der Ansprüche 1 bis 9, bei dem Anteil B von Polyisobutylen abgeleitet ist.

11. Copolymer nach Anspruch 10, das von einer Ethylen/Propylen-Polymerbernsteinsäure oder einem Ethylen/Propylen-Polymerbernsteinsäureanhydrid und einem Polyisobutylenamin abgeleitet ist.

12. Brennstoffölzusammensetzung, die ein Copolymer AB gemäß der Definition in einem der Ansprüche 1 bis 11 umfaßt.

13. Zusammensetzung nach Anspruch 12, bei der das Copolymer AB in einem Anteil von 0,005 bis 0,5 Gew.% vorhanden ist, bezogen auf das Gewicht des Brennstofföls.

14. Brennstofföladditivkonzentrat, das 2 bis 90 Gew.% eines Copolymers AB gemäß der Definition in einem der Ansprüche 1 bis 11 in Brennstofföl oder einem mit Brennstofföl mischbaren Lösungsmittel umfaßt.

15. Verwendung eines Copolymers AB gemäß der Definition in einem der Ansprüche 1 bis 11 als Paraffinkristallmodifizierungsmittel in einem Brennstofföl.

16. Zusammensetzung oder Konzentrat gemäß einem der Ansprüche 12 bis 14, bei der bzw. bei dem das Copolymer AB zusammen mit einem oder mehreren anderen Tieftemperaturfließverbesserern vorhanden ist.

17. Zusammensetzung oder Konzentrat gemäß Anspruch 16, bei der bzw. bei dem der andere Tieftemperaturfließverbesserer einer oder mehrere aus dem Amid/Aminsalz-Reaktionsprodukt einer Carbonsäure

oder eines Carbonsäureanhydrids und eines kohlenwasserstoffsubstituierten Amins, einem "Kamm"-Polymer oder einem Ethylen/Vinylester-Copolymer ist.

## Revendications

1. Copolymère séquencé de formule AB, dans laquelle :

   (i) le groupement A est dérivé d'un copolymère éthylène-alpha-oléfine ayant une moyenne numérique du poids moléculaire de 1000 à 10 000, au moins 30 % des chaînes du copolymère contenant une insaturation éthénylidène terminale, le groupement portant un groupe électrophile terminal dérivé d'un substituant acide ; et
   (ii) le groupement B a une moyenne numérique du poids moléculaire d'au moins 800 et est est dérivé d'un polymère, soluble dans l'huile, comprenant une quantité dominante d'une mono-oléfine en $C_2$ à $C_{10}$, le groupement portant un groupe nucléophile provenant d'une amine ;

   la liaison entre les groupements étant le produit d'une ou plusieurs réactions entre le groupe électrophile et le groupe nucléophile.

2. Copolymère suivant la revendication 1, dans lequel le groupement A est dérivé d'un copolymère éthylène-propylène.

3. Copolymère suivant la revendication 1 ou 2, dans lequel la teneur molaire en éthylène du groupement A est comprise dans l'intervalle de 20 à 80 % et de préférence de 30 à 70 %.

4. Copolymère suivant l'une quelconque des revendications 1 à 3, dans lequel le groupement polymérique A est un polymère ayant une moyenne numérique du poids moléculaire (Mn) de 1000 à 5000.

5. Copolymère suivant la revendication 4, dans lequel le groupement polymérique A est un polymère ayant une valeur de Mn de 1500 à 3000.

6. Copolymère suivant l'une quelconque des revendications 1 à 5, dans lequel le groupement A est dérivé d'un copolymère obtenu par polymérisation en présence d'une formulation de catalyseur comprenant au moins un métallocène et un alumoxane.

7. Copolymère suivant l'une quelconque des revendications 1 à 6, dans lequel le groupement B a une valeur de Mn comprise dans l'intervalle de 900 à 5000.

8. Copolymère suivant l'une quelconque des revendications 1 à 7, dans lequel le poids moléculaire d'un des groupements A et B est compris dans l'intervalle de 75 % à 125 % du poids moléculaire de l'autre groupement.

9. Copolymère suivant l'une quelconque des revendications 1 à 8, dans lequel plus d'une chaîne forme le groupement B.

10. Copolymère suivant l'une quelconque des revendications 1 à 9, dans lequel le groupement B est dérivé d'un polyisobutylène.

11. Copolymère suivant la revendication 10, qui est dérivé d'un polymère éthylène-propylène, d'acide ou d'anhydride succinique et d'une polyisobutylène-amine.

12. Composition de fuel-oil comprenant un copolymère AB répondant à la définition suivant l'une quelconque des revendications 1 à 11.

13. Composition suivant la revendication 12, dans laquelle le copolymère AB est présent en une proportion de 0,005 à 0,5 % en poids, sur la base du poids du fuel-oil.

14. Concentré d'additif pour fuel-oil comprenant 2 à 90 % en poids d'un copolymère AB, répondant à la définition suivant l'une quelconque des revendications 1 à 11, dans un fuel-oil ou dans un solvant miscible à un fuel-oil.

**15.** Utilisation d'un copolymère AB, répondant à la définition suivant l'une quelconque des revendications 1 à 11, comme modificateur des cristaux de cire dans un fuel-oil.

**16.** Composition ou concentré suivant l'une quelconque des revendications 12 à 14, dans lequel le copolymère AB est présent en association avec un ou plusieurs autres agents améliorant l'écoulement à basse température.

**17.** Composition ou concentré suivant la revendication 16, dans lequel l'autre agent améliorant l'écoulement à basse température consiste en un ou plusieurs des agents suivants : l'amide/sel d'amine consistant en le produit de réaction d'un acide ou anhydride carboxylique et d'une amine à substituant hydrocarbyle, un polymère "en peigne" et un copolymère éthylène-ester vinylique.